# FASCICULE DE BREVET EUROPEEN

(11) **EP 2 507 289 B1**
(45) Date de publication et mention de la délivrance du brevet: **16.04.2014**
(21) Numéro de dépôt: 10790383.3
(22) Date de dépôt: 03.12.2010
(51) Int. Cl.: C08G 63/82, C08G 63/83

(54) **PROCEDE DE POLYMERISATION EN MASSE DU LACTIDE**
VERFAHREN ZUR MASSENPOLYMERISATION VON LACTID
METHOD FOR BULK POLYMERIZATION OF LACTIDE

(30) Priorité: 03.12.2009 BE 200900745
(43) Date de publication de la demande: 10.10.2012
(73) Titulaire: Futerro S.A., 7760 Escanaffles (BE)
(72) Inventeur: SIROL, Sabine, B-1440 Wauthier-Braine (BE)
(74) Mandataire: Leyder, Francis
(86) Numéro de dépôt international: PCT/EP2010/068860
(87) Numéro de publication internationale: WO 2011/067385

(56) Documents cités:
- WO-A2-2009/118538
- BREYFOGLE L E ET AL: "Comparison of structurally analogous Zn2, Co2, and Mg2 catalysts for the polymerization of cyclic ethers", DALTON TRANSACTIONS, RSC PUBLISHING, CAMBRIDGE, GB LNKD- DOI:10.1039/B507014G, 1 janvier 2006 (2006-01-01), pages 928-936, XP002534374, ISSN: 1477-9226 [extrait le 2005-11-04]
- WILLIAMS C K ET AL: "A Highly Active Zinc Catalyst for the Controlled Polymerization of Lactide", JOURNAL OF THE AMERICAN CHEMICAL SOCIETY, AMERICAN CHEMICAL SOCIETY, NEW YORK, US LNKD- DOI:10.1021/JA0359512, vol. 125, no. 37, 1 janvier 2003 (2003-01-01), pages 11350-11359, XP002534371, ISSN: 0002-7863 [extrait le 2003-08-21]

## Description

### Domaine de l'invention

La présente invention se rapporte à un procédé en masse pour la polymérisation du lactide, plus particulièrement à un procédé de polymérisation en présence de catalyseur exempt d'étain.

### Arrière-plan technologique

La polymérisation par ouverture de cycle est la voie la plus efficace pour l'obtention de (co)polyesters aliphatiques à partir de monomères choisis dans le groupe comprenant les lactides, de configuration L- ou D-, les lactones, les carbonates cycliques ainsi que les anhydrides cycliques. Ces polymères de synthèse suscitent un grand intérêt en tant que matériaux biodégradables. Compte tenu de leurs propriétés intrinsèques, les polymères biodégradables sont devenus une alternative importante aux polymères synthétiques basés sur des composés issus de la pétrochimie, et de nombreuses avancées ont été accomplies tant du point de vue de la synthèse que de la transformation de ces matériaux. Ceux-ci sont d'ailleurs utilisés pour un grand nombre d'applications comme l'emballage et le textile. Parmi la variété de polymères biodégradables, le polylactide (PLA) est un des plus couramment utilisés et étudiés.

La polymérisation par ouverture de cycle du lactide est la voie de synthèse couramment utilisée pour la production de polylactide. Elle s'effectue généralement en solution ou en masse (en absence de solvant) en présence d'un système catalytique, et même parfois en présence d'un amorceur de type alcool ou amine. Les catalyseurs utilisés sont décrits dans la littérature et notamment dans le brevet EP 0 615 532, comme par exemple le Sn(II) bis(2-éthylhexanoate), le butyl étain tris(2-ethylhexanoate) et le dibutyl étain diacetate. On peut également mentionner l'utilisation de bases de Lewis comme co-catalyseur, tel que décrit dans le brevet US 6,166,169, et notamment le système catalytique, octanoate d'étain (Sn(Oct)₂)/triphényle phosphine (P(Ph)₃) couramment utilisé à ce jour dans la polymérisation du lactide.

Il existe cependant une volonté à terme de réaliser la polymérisation du lactide, par ouverture de cycle, en présence de catalyseurs exempts d'étain.

Il existe également une volonté de réaliser la polymérisation du lactide, par ouverture de cycle, en masse. En effet, un procédé en masse est particulièrement bien applicable à une exploitation industrielle car il permet une obtention rapide du polylactide et une exploitation directe du polymère contrairement au procédé en solution à la suite duquel le polymère obtenu doit être séparé du solvant, ce qui d'une part augmente la complexité du procédé et d'autre part affecte sa rentabilité économique.

Le document US 7,169,729 divulgue l'oligomérisation en solution à 40°C du D,L-lactide en présence du catalyseur Zn[N(SiMe₃)₂]₂.

Le document US 6,297,350 divulgue la polymérisation en masse à 150°C du L-lactide en présence d'alcool et de lactate de zinc en tant que catalyseur. Le rendement demeure cependant relativement faible.

Le document US 2007/0083019 divulgue la polymérisation par ouverture de cycle d'oligomères d'acides cycliques ω-hydroxycarboxylique en présence d'un complexe organométallique à base de zinc. Ce document ne divulgue cependant pas la polymérisation du lactide en présence de ce complexe.

J. Am. Chem. Soc., 2003, 125, 11350-11359 divulgue la polymérisation du lactide en solution à température ambiante en présence d'un complexe organométallique à base de zinc. Ce document ne divulgue cependant pas la polymérisation du lactide en masse et à haute température avec ce complexe.

### Résumé de l'invention

La présente invention a pour objet un procédé de polymérisation en masse du lactide, par ouverture de cycle, en présence d'un catalyseur exempt d'étain.

Un autre objet de la présente invention est de fournir un procédé de polymérisation en masse du lactide pour la production de polylactide de haute masse moléculaire moyenne en nombre (Mn) comprise entre 75.000 et 100.000 Dalton.

Un autre objet de la présente invention est de fournir un procédé de polymérisation en masse du lactide pour la production de polylactide ayant une polydispersité comprise entre 1,4 et 1,9.

Un autre objet de la présente invention est de fournir un procédé de polymérisation en masse du lactide pour la production de polylactide avec un taux de conversion du lactide en polylactide supérieur à 85%.

Enfin, un autre objet de la présente invention est de fournir un procédé de polymérisation en masse du lactide pour la production de polylactide incolore.

Au moins un des objets est réalisé par la présente invention.

Dans la présente invention, on entend par polymérisation en masse du lactide, toute polymérisation du lactide se faisant en absence de solvant, à l'état fondu. La polymérisation en masse n'exclut pas le solvant éventuellement nécessaire à la dissolution du catalyseur.

Dans la présente invention, on entend par polydispersité, le rapport entre la masse moléculaire moyenne en poids (Mw) et la masse moléculaire moyenne en nombre (Mn).

### Description détaillée de l'invention,

La présente invention fournit un procédé de polymérisation en masse du lactide, à une température comprise entre 160°C et 195°C, comprenant la mise en contact du lactide avec un catalyseur métallique de formule générale (I)

L-Zn-X (I)

dans laquelle
L est représenté par la formule (II) 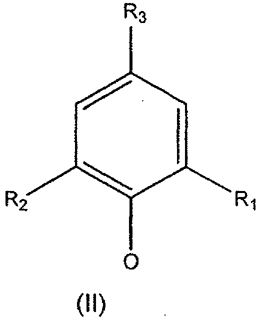 dans laquelle
* R1 est CH2-N(R4)-CH2-CH2-N(R5)(R6) dans laquelle R4, R5 et R6 sont des radicaux identiques ou différents, choisis parmi les alkyles ayant de 1 à 10 atomes de carbone ; ou dans laquelle R4 et R5 sont liés entre eux et représente chacun un groupement méthylène et R6 est un radical choisi parmi les alkyles ayant de 1 à 10 atomes de carbone,
* R2 et R3 sont des radicaux identiques ou différents, choisis parmi les alkyles ayant de 1 à 10 atomes de carbone,
X est un alkyle ayant de 1 à 10 atomes de carbone; ou un groupe alcoxyde UR' dans lequel R' est un alkyle ayant de 1 à 10 atomes de carbone; ou le groupe N(SiMe₃)₂.

Au sens de la présente invention, on entend par « alkyle » un groupe hydrocarboné linéaire ou ramifié, saturé, de 1 à 10 atomes de carbone. A titre d'exemple, sont inclus dans cette défiinition des radicaux tels que méthyle, éthyle, isopropyle, n-propyle, n-butyle, t-butyle, pentyle, n- hexyle, 2-éthylbutyle, heptyle, octyle, 2-éthylhexyle, nonyle, ou décyle.

Au sens de la présente invention, on entend par « alcoxyde » un groupe de formule générale OR' où R' est un groupe alkyle tel que définit dans le paragraphe précédent. On peut citer, à titre d'exemple, les groupes méthoxy, éthoxy, propoxy, isopropoxy, t-butoxy, n-butoxy, isobutoxy, sec-butoxy, n-pentoxy, isopentoxy, sec-pentoxy, t-pentoxy, hexyloxy.

Dans la présente invention, lorsque R4 et R5 sont liés entre eux et représente chacun un groupement méthylene et R6 est un radical choisi parmi les alkyles ayant de 1 à 10 atomes de carbone, R1 peut alors être aussi représenté schématiquement de la manière suivante :

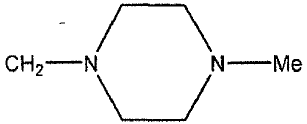

Préférentiellement, R6 est un alkyle ayant de 1 à 4 atomes de carbone, plus préférentiellement R6 est un radical méthyle.

Préférentiellement, R1 est CH2-N(R4)-CH2-CH2-N(R5)(R6) dans laquelle R4, R5 et R6 sont des radicaux identiques ou différents, choisis parmi les alkyles ayant de 1 à 10 atomes de carbone. Préférentiellement, R4, R5 et R6 est méthyle, éthyle, isopropyle ou tert-butyle, plus préférentiellement méthyle ou éthyle, encore plus préférentiellement méthyle.

Préférentiellement, R2 et R3 est méthyle, éthyle, isopropyle ou tert-butyle, plus préférentiellement isopropyle ou tert-butyle, encore plus préférentiellement tert-butyle.

Préférentiellement, X est méthyle, éthyle, isopropyle, n-butyle ou un groupe alcoxyde OR' dans lequel R' est méthyle, éthyle, isopropyle ou tert-butyle. Plus préférentiellement, X est un groupe alcoxyde dans lequel R' est éthyle, isopropyle ou tert-butyle, encore plus préférentiellement éthyle.

En général, on conduit la polymérisation du lactide en présence de ce type de catalyseur, qui est utilisé dans une quantité telle que le rapport molaire lactide/ catalyseur est compris entre 1.000/1 et 10.000/1, de préférence entre 2.000/1 et 8.000/1 et plus préférentiellement entre 4.000/1 et 6.000/1.

Le procédé de polymérisation de la présente invention pour polymériser des lactides, de configuration L ou D se fait en masse, en mettant en contact le lactide avec le catalyseur dans un réacteur muni de préférence d'un agitateur pour haute viscosité ou par extrusion dans une extrudeuse (ou réacteur horizontal) à simple, double ou multiple vis sous atmosphère inerte en présence d'argon ou d'azote. Néanmoins, il peut aussi avoir lieu sous atmosphère ambiante. Le procédé de polymérisation se fait généralement à une température comprise entre 160°C et 195°C, préférentiellement entre 165°C et 190°C. Le procédé peut également se faire en présence d'agents stabilisants et/ou d'antioxydants bien connus par l'homme de l'art. Parmi les agents stabilisant couramment utilisés, on peut citer le (2,4-diterbutylphenyl) pentaerythritol diphosphite aussi appelé Ultranox 626. Le procédé peut être conduit en continu ou en discontinu.

Préférentiellement, le lactide utilisé dans le procédé de l'invention est le lactide de configuration L (L-L lactide) ou le lactide de configuration D (D-D lactide), plus préférentiellement le lactide de configuration L.

Selon un mode particulier de l'invention, le procédé peut également comprendre l'utilisation d'un amorceur. L'amorceur peut être l'eau résiduelle contenue dans le lactide, un alcool ou une amine. De préférence, l'amorceur de la polymérisation du lactide est un alcool ou une amine.

L'alcool ou l'amine peut être aliphatique ou aromatique de formule générale R-(A)ₙ dans laquelle, n est 1 ou 2, A est OH ou NH₂ et R est un radical alkyle contenant de 1 à 20 atomes de carbone ou un radical aryle comportant de 6 à 30 atomes de carbone. De préférence, R est un radical alkyle comportant de 3 à 12 atomes de carbone ou un radical aryle comportant de 6 à 10 atomes de carbone. Le radical alkyle ou aryle peut être substitué ou non. Le radical alkyle peut être linéaire, cyclique, saturé ou non saturé.

Parmi les amines, on peut citer l'isopropylamine, la 1,4-butanediamine, la 1,6-hexanediamine, 1,4 cyclohexanediamine.

Parmi las alcools, on peut citer l'isopropanol, le 1-octanol, le 1,3-propanediol, le 1,3-butanediol, le 1,4-butanediol, le 1,6-hexanediol, le 1,7-heptanediol, le xylène glycol.

Le rapport molaire entre le lactide et l'amorceur, lorsque ce dernier est un alcool ou une amine peut être compris entre 50/1 et 1.500/1, préférentiellement entre 100/1 et 750/1, plus préférentiellement entre 300/1 et 600/1.

La Demanderesse a trouvé que l'utilisation du catalyseur exempt d'étain, tel que décrit précédemment, permet la polymérisation en masse du lactide, à une température comprise entre 160°C et 195°C avec un taux de conversion élevé du lactide en polylactide tout en obtenant un polylactide incolore, directement après la polymérisation, et de haute masse moléculaire moyenne en nombre ainsi que de faible polydispersité, ceci en évitant tout phénomène de dégradation du catalyseur en cours de polymérisation. Ce résultat était tout à fait inattendu car il n'a pas pu être obtenu avec d'autres espèces de catalyseurs à base de zinc généralement utilisés de manière fructueuse pour la polymérisation en solution du lactide.

### Exemples et exemples comparatifs

Dans les exemples et exemples comparatifs, la masse moléculaire moyenne en nombre (Mn) du PLA a été déterminée par chromatographie d'exclusion stérique dans le chloroforme à 35°C, moyennant un étalonnage au départ de huit standards de polystyrène de masses molaire moyenne en nombre connue et comprise entre 600 et 1.700.000 Dalton. L'équipement de chromatographie d'exclusion stérique utilisé est de marque Agilent Technologies 1200 Series. Les échantillons mis en solution dans du chloroforme à raison de 0,1% (poids/volume) ont été élués à un débit de 1 ml/min à travers une précolonne PL gel 10µm et deux colonnes à gradient PL gel 5µm mixed-d. Le volume injecté est de 100µl.

Dans les exemples et exemples comparatifs, la couleur du PLA a été déterminée directement après polymérisation et avant toute recristallisation du PLA (PLA brut).

### 1. Synthèse du (2,4-di-tert-butyl-6-(((2-(dimethylamino)ethyl)(methyl)amino)methyl)phenoxy)(ethoxy)zince, dénommé ci-après DDTBP-Zn (OEt).

La synthèse a été effectuée selon le protocole opératoire décrit par Williams et al. dans J. Am. Chem. Soc., 2003, 125, 11350-11359.

### 2. Exemples 1 à 2 (exemples selon l'invention)

On a réalisé la polymérisation en masse, sous atmosphère inerte, du L-Lactide en présence du catalyseur DDTBP- Zn(OEt) représenté par la formule suivante :

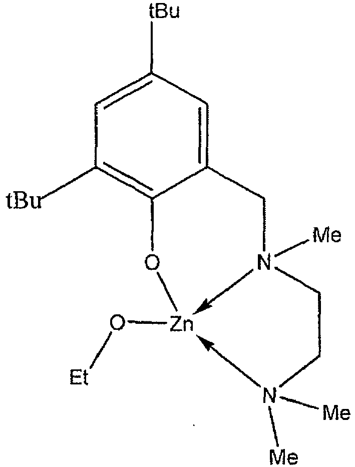

La polymérisation a eu lieu en présence de 1-octanol, en tant qu'amorceur, dans un réacteur en verre d'une capacité de 50 ml que l'on a rempli, sous atmosphère inerte, avec 5g de L-Lactide, le catalyseur et l'amorceur dans les quantités telles que décrites dans la tableau 1. On a utilisé chaque fois 1 ml de solution catalytique dans du toluène. La conversion du L-lactide en polylactide a été déterminée après 30 minutes de polymérisation sur le polymère préalablement recristallisé dans un mélange de chloroforme et d'éthanol puis séché sous vide.

### Exemples 3-6 (exemples comparatifs)

On a réalisé la polymérisation en masse, sous atmosphère inerte, du L-Lactide en présence de catalyseurs autres que ceux mentionnés dans le procédé de l'invention. La polymérisation a eu lieu dans un réacteur en verre d'une capacité de 50 ml que l'on a rempli, sous atmosphère inerte, avec 5g de L-Lactide, le catalyseur et le 1-octanol (amorceur) dans les quantités telles que décrites dans le tableau 1. On a utilisé chaque fois 1 ml de solution catalytique dans du toluène. La mesure de conversion du L-lactide en polylactide a été déterminée de la même manière que celle décrite pour les exemples 1-2 selon l'invention.

Les catalyseurs testés sont :
- le bis[bis(triméthylsilyl) amide] de zinc identifié ci-après Zn[N(SiMe₃)₂]₂,
- le diéthylzinc identifié ci-après DEZ et
- le trifluorométhane sulfonate de zinc identifié ci-après Zn(OTf)₂.

Les résultats sont indiqués dans le tableau 1 ci-dessous. En ce qui concerne l'exemple 6 (comparatif), aucune réaction de polymérisation n'a eu lieu en présence du trifluorométhane sulfonate de zinc.

**Tableau 1**

| Exemples | Température de polymérisation (°C) | Lactide/octanol (mol/mol) | Lactide/catalyseur (mol/mol) | Catalyseur | Conversion du lactide en polylactide. (%) | Couleur du polylactide (PLA brut) | Mn (Dalton) | Indice de polydispersité (Mw/Mn) |
|---|---|---|---|---|---|---|---|---|
| 1 (invention) | 185 | 316 | 5028 | DDTBP-Zn(OEt) | 90 | Incolore | 77.000 | 1.8 |
| 2 (invention) | 185 | 307 | 4876 | DDTBP-Zn(OEt) | 88 | Incolore | 88.000 | 1.6 |
| 3 (comparatif) | 185 | 340 | 5607 | Zn[N(SiMe₃)₂]₂ | 83 | Jaune | 66.000 | 1.5 |
| 4 (comparatif) | 185 | 323 | 5270 | DEZ | 81 | Jaune | 78.000 | 1.5 |
| 5 (comparatif) | 185 | 320 | 5221 | DEZ | 83 | Légèrement jaunâtre | 66.000 | 1.4 |
| 6 (comparatif) | 185 | 362 | 4984 | Zn(OTf)₂ | - | - | - | - |

| | | | | | | | | |
|---|---|---|---|---|---|---|---|---|
| -: non applicable | | | | | | | | |

## Revendications

1. Procédé de polymérisation en masse du lactide, à une température comprise entre 160°C et 195°C, comprenant la mise en contact du lactide avec un catalyseur métallique de formule générale (I)
L-Zn-X (I)
dans laquelle
L est représenté par la formule (II) 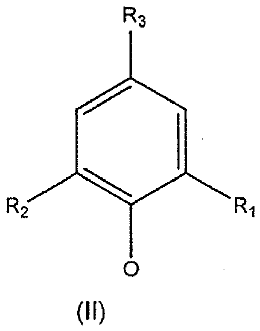 dans laquelle
* R1 est CH2-N(R4)-CH2-CH2-N(R5)(R6) dans laquelle R4, R5 et R6 sont des radicaux identiques ou différents, choisis parmi les alkyles ayant de 1 à 10 atomes de carbone ; ou dans laquelle R4 et R5 sont liés entre eux et représente chacun un groupement méthylène et R6 est un alkyle ayant de 1 à 10 atomes de carbone,
* R2 et R3 sont des radicaux identiques ou différents, choisis parmi les alkyles ayant de 1 à 10 atomes de carbone,
X est un alkyle ayant de 1 à 10 atomes de carbone ; ou un groupe alcoxyde OR' dans lequel R' est un alkyle ayant de 1 à 10 atomes de carbone ; ou le groupe N(SiMe₃)₂.

2. Procédé selon la revendication 1 **caractérisé en ce que** R1 est CH2-N(R4)-CH2-CH2-N(R5)(R6) dans laquelle R4, R5 et R6 est méthyle, éthyle, isopropyle ou tert-butyle.

3. Procédé selon la revendication 2 **caractérisé en ce que** R4, R5 et R6 est méthyle ou éthyle, préférentiellement méthyle.

4. Procédé selon l'une quelconques des revendications 1 à 3 **caractérisé en ce que** R2 et R3 est méthyle, éthyle, isopropyle ou tert-butyle.

5. Procédé selon la revendication 4 **caractérisé en ce que** R2 et R3 est isopropyle ou tert-butyle, préférentiellement tert-butyle.

6. Procédé selon l'une quelconques des revendications 1 à 5 **caractérisé en ce que** X est méthyle, éthyle, isopropyle, n-butyle ou un groupe alcoxyde OR' dans lequel R' est méthyle, éthyle, isopropyle ou t-butyle.

7. Procédé selon la revendication 6 **caractérisé en ce que** X est un groupe alcoxyde dans lequel R' est éthyle, isopropyle ou t-butyle, préférentiellement éthyle.

8. Procédé selon l'une quelconques des revendications 1 à 7, **caractérisé en ce que** l'on utilise le catalyseur en une quantité telle que le rapport molaire lactide/catalyseur est compris entre 1.000/1 et 10.000/1, de préférence entre 2.000/1 et 8.000/1.

9. Procédé selon l'une quelconques des revendications 1 à 8 **caractérisé en ce que** le procédé est effectué en présence d'un amorceur de polymérisation.

## Patentansprüche

1. Verfahren zur Massenpolymerisation von Lactid bei einer Temperatur zwischen 160 °C und 195 °C inklusive, das das Inkontaktversetzen des Lactids mit einem metallischen Katalysator der allgemeinen Formel (I)
L-Zn-X (I)
umfasst, wobei
L von der Formel (II) 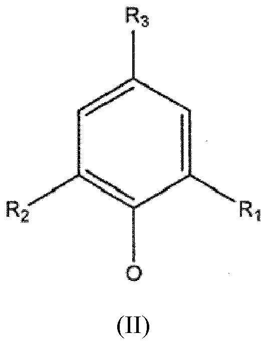 dargestellt wird, wobei
* R1 CH2-N(R4)-CH2-CH2-N(R5)(R6) ist, wobei R4, R5 und R6 identische oder unterschiedliche Radikale sind, ausgewählt aus den Alkylen mit 1 bis 10 Kohlenstoffatomen, oder wobei R4 und R5 untereinander verbunden sind und jeweils eine Methylengruppe repräsentieren und R6 ein Alkyl mit 1 bis 10 Kohlenstoffatomen ist,
* R2 und R3 identische oder unterschiedliche Radikale sind, die aus den Alkylen mit 1 bis 10 Kohlenstoffatomen ausgewählt sind,
X ein Alkyl mit 1 bis 10 Kohlenstoffatomen ist, oder eine Alcoxidgruppe OR', wobei R' ein Alkyl mit 1 bis 10 Kohlenstoffatomen ist, oder die Gruppe N(SiMe₃)₂.

2. Verfahren nach Anspruch 1, **dadurch gekennzeichnet, dass** R1 CH2-N(R4)-CH2-CH2-N(R5)(R6) ist, wobei R4, R5 und R6 Methyl, Ethyl, Isopropyl oder tert-Butyl sind.

3. Verfahren nach Anspruch 2, **dadurch gekennzeichnet, dass** R4, R5 und R6 Methyl oder Ethyl, vorzugsweise Methyl, sind.

4. Verfahren nach einem der Ansprüche 1 bis 3, **dadurch gekennzeichnet, dass** R2 und R3 Methyl, Ethyl, Isopropyl oder tert-Butyl sind.

5. Verfahren nach Anspruch 4 **dadurch gekennzeichnet, dass** R2 und R3 Isopropyl oder tert-Butyl, vorzugsweise tert-Butyl, sind.

6. Verfahren nach einem der Ansprüche 1 bis 5, **dadurch gekennzeichnet, dass** X Methyl, Ethyl, Isopropyl, n-Butyl oder eine Alcoxidgruppe OR' ist, wobei R' Methyl, Ethyl, Isopropyl oder t-Butyl ist.

7. Verfahren nach Anspruch 6, **dadurch gekennzeichnet, dass** X eine Alcoxidgruppe ist, wobei R' Ethyl, Isopropyl oder t-Butyl, vorzugsweise Ethyl, ist.

8. Verfahren nach einem der Ansprüche 1 bis 7, **dadurch gekennzeichnet, dass** der Katalysator in einer Menge verwendet wird, die derart ist, dass das molare Verhältnis Lactid/Katalysator zwischen 1.000/1 und 10.000/1, vorzugsweise zwischen 2.000/1 und 8.000/1, inklusive ist.

9. Verfahren nach einem der Ansprüche 1 bis 8, **dadurch gekennzeichnet, dass** das Verfahren bei Anwesenheit eine Polymerisationsprimers durchgeführt wird.

## Claims

1. A method for bulk polymerization of lactide, at a temperature comprised between 160°C and 195°C, comprising the contacting of the lactide with a metal catalyst of general formula (I)
L-Zn-X (I)
wherein
L is represented by the formula (II) 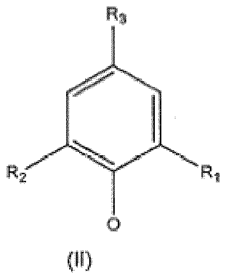 wherein
* R1 is CH₂-N(R4)-CH₂-CH₂-N(R5)(R6) wherein R4, R5 and R6 are identical or different radicals, selected from alkyls having from 1 to 10 carbon atoms; or wherein R4 and R5 are bound together and each represents a methylene group and R6 is an alkyl having from 1 to 10 carbon atoms,
* R2 and R3 are identical or different radicals, selected from alkyls having from 1 to 10 carbon atoms,
X is an alkyl having from 1 to 10 carbon atoms; or an alkoxide group OR' wherein R' is an alkyl having from 1 to 10 carbon atoms; or the N(SiMe₃)₂ group.

2. The method according to claim 1, **characterized in that** R1 is CH₂-N(R4)- CH₂-CH₂-N(R5)(R6) wherein R4, R5 and R6 is methyl, ethyl, isopropyl or tert-butyl.

3. The method according to claim 2, **characterized in that** R4, R5 and R6 is methyl or ethyl, preferentially methyl.

4. The method according to any of claims 1 to 3, **characterized in that** R2 and R3 is methyl, ethyl, isopropyl or tert-butyl.

5. The method according to claim 4, **characterized in that** R2 and R3 is isopropyl or tert-butyl, preferentially tert-butyl.

6. The method according to any of claims 1 to 5, **characterized in that** X is methyl, ethyl, isopropyl, n-butyl,or an alkoxide group OR' wherein R' is methyl, ethyl, isopropyl or t-butyl.

7. The method according to claim 6, **characterized in that** X is an alkoxide group wherein R' is ethyl, isopropyl or t-butyl, preferentially ethyl.

8. The method according to any of claims 1 to 7, **characterized in that** the catalyst is used in an amount such that the lactide/catalyst molar ratio is comprised between 1,000/1 and 10,000/1, preferably between 2,000/1 and 8,000/1.

9. The method according to any of claims 1 to 8, **characterized in that** the method is carried out in the presence of a polymerization initiator.
